# EUROPEAN PATENT SPECIFICATION

(11) **EP 3 031 737 B1**
(45) Date of publication and mention of the grant of the patent: **30.08.2017**
(21) Application number: 14197826.2
(22) Date of filing: 12.12.2014
(51) Int. Cl.: B65C 9/00

(54) **Labelling machine and method of docking a modular labelling group to a labelling machine**
Etikettiermaschine und Verfahren zur Andockung einer modularen Etikettiergruppe an eine Etikettiermaschine
Machine d'étiquetage et procédé de fixation d'un groupe d'étiquetage modulaire sur une machine d'étiquetage

(43) Date of publication of application: 15.06.2016
(73) Proprietor: SIDEL PARTICIPATIONS, S.A.S., 76930 Octeville-sur-Mer (FR)
(72) Inventor: Ugolini, Davide, 43126 PARMA (IT); Molinari, Stefano, 43126 PARMA (IT)
(74) Representative: Siloret, Patrick

(56) References cited:
- EP-A1- 2 712 820
- WO-A1-2011/027372

## Description

The present invention relates to a labelling machine for applying a plurality of labels onto respective containers filled with a pourable food product.

Labelling machines are known, which substantially comprise:
- a rotary carousel, which is fed with articles to be labelled at an input station, conveys that articles along an arch-shaped path, and outputs the labelled articles to an output station; and
- a plurality of modular labelling groups, which are arranged at the outer periphery of the carousel and which feed and apply a plurality of labels onto respective articles at respective application stations arranged on the arch-shaped path.

Labelling machine is known as "roll-feed", in which each modular labelling group substantially comprises, each,:
- a frame, which rests on the floor and is docked to the carousel;
- a shaft for rotatably supporting a reel off which a strip of labels is unwound and fed along a feed path;
- a plurality of unwinding rollers for guiding the strip along a rectilinear feed path;
- a cutter for cutting a sequence of single labels from the strip;
- a transfer drum for advancing each label which has been previously cut; and
- a gluing drum for applying glue onto each previously cut label.

In particular, a conventional transfer drum is rotatable about an axis, comprises an outer surface which receives a succession of cut labels and covered with glue, and releases those labels at respective application station after rotation about its own axis of a certain angle.

The transfer drum conveys the labels tangentially to the outer surface of the articles and to be labelled, at the application station.

The frame supports the shaft, the unwinding rollers, the transfer drum and the gluing drum.

The carousel further comprises an interface area for the docking to the modular labelling group.

The interface area comprises a pair of seats, which are angularly spaced from one another and are engaged by corresponding pins carried by the modular labelling group, when the latter is docked to the carousel.

Still more precisely, the operator:
- moves the modular operative group on a trans-pallet up to reach a position close to the carousel;
- lowers the trans-pallet up to when the pins engage the relative seats and the modular labelling group is supported by relative support elements, so as to dock the modular labelling group to the carousel; and
- then moves away from the carousel the trans-pallet without the modular labelling group thereon.

Though performing excellently on the whole, the labelling machine of the type described still leave room for further improvement.

As a matter of fact, the Applicant has found that during the operation of the labelling machine, the inevitable vibrations generated by the operation of the labelling group inevitably result in the movement of the pins with respect to the relative seats.

As a consequence, the modular operative group slightly moves with respect to the carousel in comparison with its theoretical operative position, thus inevitably affecting the final precision and repeatibility in the application of the labels to the articles.

Furthermore, in certain embodiments, the labelling group is particularly unbalanced and non-symmetrical. Even, the barycentre of the labelling group can be arranged outside the frame.

In this case, the precise and repeatable positioning of both the pins inside relative seats is really difficult for the operator and there is the risk that one of the pins is not precisely inserted in the relative seat.

As a result, either the labelling machine is prevented from operating due to the detection of a not proper docking of the modular labelling group or the error in the mutual positioning of the modular labelling group and the carousel inevitably affects the final precision and repeatibility in the application of the labels to the articles.

Finally, in case that the floor is not even, once docked to the carousel, the modular labelling group is set in a position different from the theoretical one assumed in case of even floor.

As a result, also in this case, the final precision and repeatibility in the application of the labels to the articles would be affected.

WO2011/027372 discloses a labelling machine according to the preamble of claim 1.

It is an object of the present invention to provide a labelling machine, designed to eliminate at least one of the above-identified drawbacks in a straightforward and low-cost manner.

According to the present invention, there is provided a labelling machine as claimed in claim 1.

The present invention also relates to a method of docking a modular labelling group to a labeling machine, as claimed in claim 12.

In the following one preferred, non-limiting embodiment of the present invention will be described by way of example with reference to the accompanying drawings, in which:
Figure 1 is a perspective view of an article-handling machine, in particular a labelling machine, for carrying out an operation, in particular a labelling operation, onto a plurality of articles, according to the present invention;
Figures 2 to 7 show respective subsequent operative steps of the docking of a modular operative group to the carousel of the article-handling machine of Figure 1;
Figure 8 shows, in a perspective view, first components of the article-handling machine of Figures 1 to 7, with parts removed for clarity and from a first visual angle;
Figure 9 shows, in a perspective view, second components of the article-handling machine of Figures 1 to 7, with parts removed for clarity and from a second visual angle; and
Figure 10 is a top view of the second components of Figure 9.

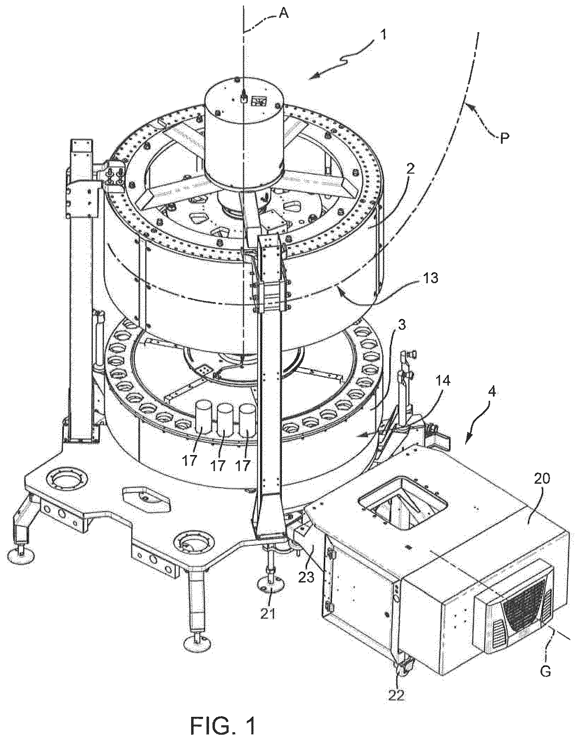

Number 1 in Figure 1 indicates as a whole a labelling machine for applying labels (not-shown) to respective articles 17, containers for pourable food product in the embodiment shown.

In particular, labelling machine 1 is a so-called "roll-fed" labelling machine.

Labelling machine 1 substantially comprises (Figure 1) :
- a stator 2;
- a carousel 3, which rotates about an axis A, vertical in use, with respect to stator 2, and advances a succession of spaced articles 17 along an arc-shaped path P;
- a plurality of modular labelling groups 4 (only one of which is shown in Figure 1), which are arranged on the periphery of carousel 3.

Carousel 3 comprises a radially outer periphery 14 with respect to axis A.

Furthermore, it is possible to identify a direction G, which is radial with respect to axis A.

Carousel 3 comprises, for each labelling group 4, a respective interface module 5 at which each labelling group 4 is docked to carousel 3.

In the embodiment shown, interface modules 5 are arranged radially inner with respect to periphery 14.

In the following of the present description, only one labelling group 4 and the corresponding interface module 5 will be described, being all labelling groups 4 and interface modules 5 identical to one another.

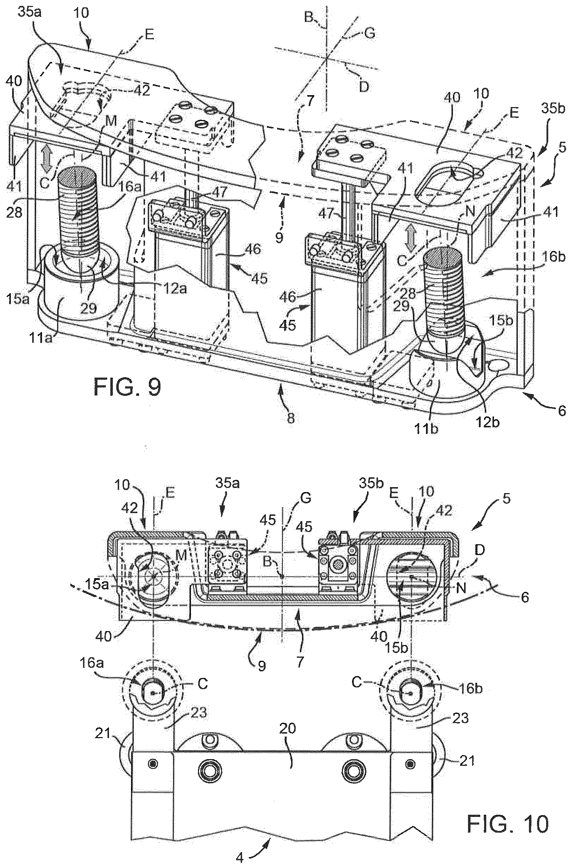

In detail, interface module 5 comprises two seats 15a, 15b (Figure 9), which are engaged by respective pins 16a, 16b carried by labelling group 4 when the latter is in the docking position.

Still more precisely, interface module 5 comprises (Figures 9 and 10) a frame 6 which is fixed to carousel 3.

It is possible to associate to interface module 5:
- an axis B, parallel to axis A and orthogonal to direction G; and
- an axis D, orthogonal to axis B and direction G.

Axes A, B are vertical, and axis D and direction G are horizontal in the embodiment shown.

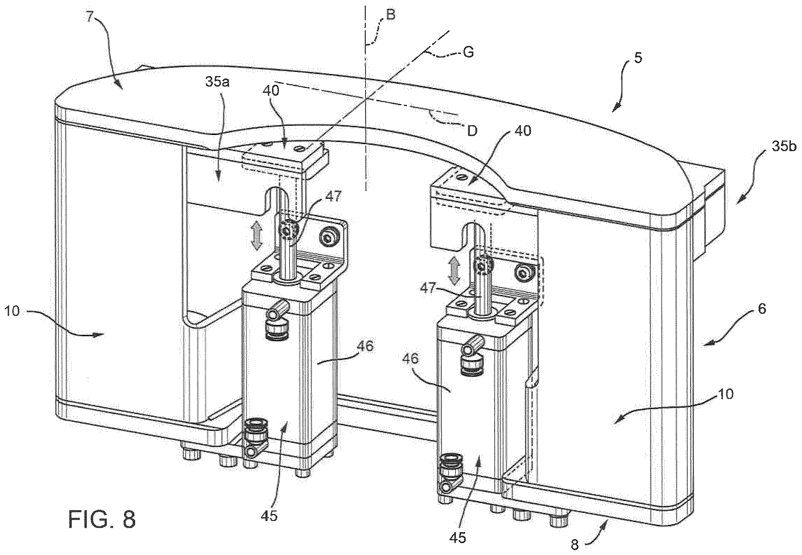

Frame 6 comprises (Figures 8 to 10):
- a top wall 7, which lies on a plane orthogonal to axis A;
- a bottom wall 8, which is parallel to and spaced from wall 7 along axis B;
- a front wall 9, which is interposed between walls 7, 8 on the opposite side of axis A; and
- a pair of rear walls 10, which are opposite to wall 9 along direction G and are arranged radially inner with respect to wall 9.

Walls 10 are aligned with one another parallel to axis D.

In the embodiment shown, wall 7 is shaped as a portion of a circular crown having the centre on axis A and wall 9 is shaped as a portion of cylinder of axis A.

Frame 6 further comprises a pair of bodies 11a, 11b, which are spaced along axis D and protrude from wall 8 towards wall 7.

Bodies 11a, 11b define respectively seats 15a, 15b.

With reference to Figure 9, body 11a is a hollow cylinder, which extends about an axis M parallel to axis B.

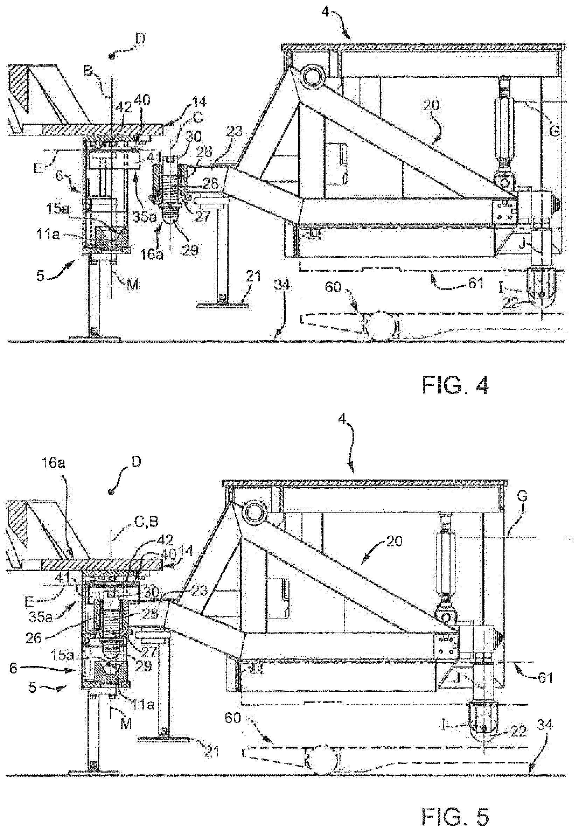

Seat 15a is conical about axis M and tapers on the opposite side of wall 8 (Figures 4 to 7), i.e. towards wall 8.

Furthermore, seat 15a is bounded by inner wall 12a of body 11a.

Body 11b is shaped as a cylinder of axis N, parallel to axis M. Body 11b is relieved along axis D.

Seat 15b is therefore conical about N and relieved about axis D.

Axes M, N are vertical in the embodiment shown.

Seat 15b is therefore closed parallel to direction G and bounded by inner wall 12b of body 11b and open parallel to axis D.

In the following of the description, the expression "frontward", "rearward", "lateral", "top", "bottom" refer to the position of the labelling group 4 with respect of carousel 3.

Labelling group 4 is of the type described in EP2580130 in the name of the same Applicant.

Labelling group 4 substantially comprises:
- a pair of shafts for rotatably supporting relative reels (of which a strip of labels is unwound and fed along a feed and application station);
- a plurality of unwinding rollers for guiding strip along the feed path;
- a cutting element (not-shown) for cutting, one after the other, labels from the strip;
- a glue roller for applying glue onto cut labels; and
- a transfer element for transferring cut and glue-covered labels along an arc-shaped trajectory to application station.

Labelling group 4 comprises, in turn, (Figures 1 to 7:
- a frame 20, which supports the shafts, the rollers, the glue roller and the transfer element;
- a pair of frontward pedestals 21, which downwardly protrude from frame 20; and
- a pair of rearward wheels 22, which downwardly protrude from frame 20.

Labelling group 4 further comprises a pair of arms 23 which frontally protrude from frame 20.

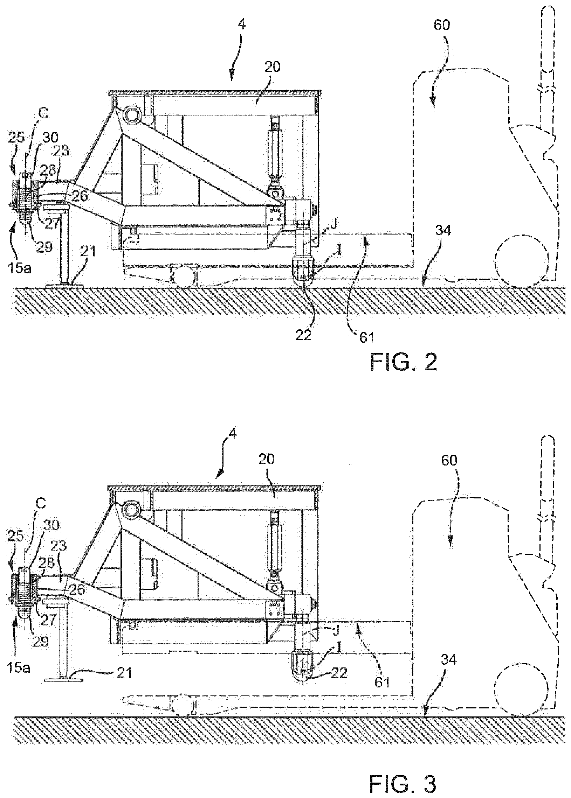

Each arm 23 supports, at end 25 (Figures 2 and 3) thereof, a cylindrical body 26, which extends about an axis C.

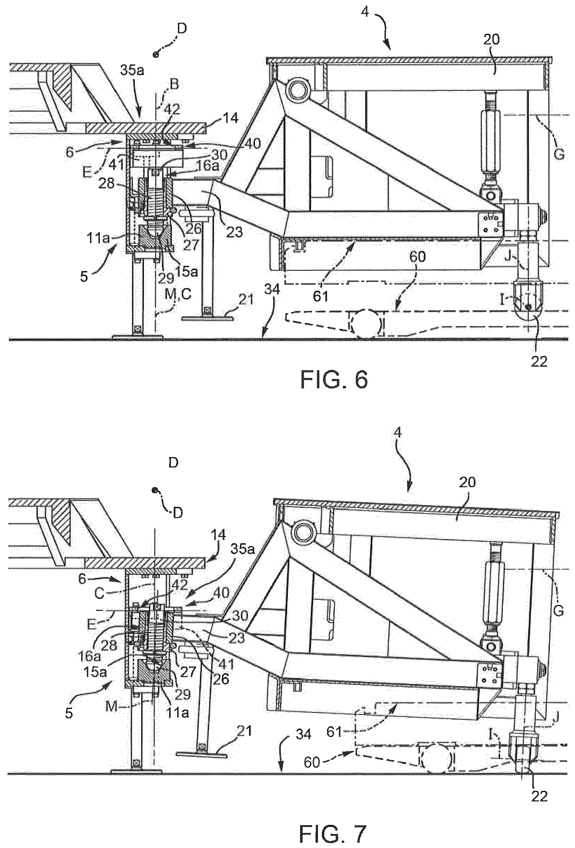

Each arm 23 further comprises a sleeve 27 (Figures 2 and 7) coaxially housed inside a relative body 26 and firmly connected to relative body 26.

Sleeves 27 coaxially house relative pins 16a, 16b respectively.

Furthermore, the radially inner surface of sleeve 27 is partially screwed and engaged by a screw portion of relative pin 16a, 16b.

In other words, pins 16a, 16b are coaxially housed inside sleeves 27 which are, in turn, coaxially housed inside relative bodies 26.

Each pin 16a, 16b comprises:
- an axial end 30, a top end in the embodiment shown;
- a stem 28, which is housed inside body 26 with radial gap with respect to axis C and is screwed to relative sleeve 27; and
- a head 29, which defines an axial end opposite to end 30, a bottom end in the embodiment shown, of stem 28 and is adapted to engage relative seat 15a, 15b.

Head 29 is shaped as a portion of a sphere.

Advantageously, labelling machine 1 comprises a pair of constraining assembly 35a, 35b for constraining respective pins 16a, 16b inside relative seats 15a, 15b; each constraining assembly 35a, 35b is movable along a relative axes B towards and away from relative pin 16a, 16b between:
- a relative rest configuration (Figures 4 to 6),
   in which it is detached from relative pin 16a, 16b engaging relative seat 15a, 15b; and
- a relative operative configuration (Figure 7), in which it cooperates with relative pin 16a, 16b engaging relative seat 15a, 15b, so as to constrain relative pin 16a, 16b inside relative seat 15a, 15b.

In this way, constraining assemblies 35a, 35b, when set in relative operative configuration, keep relative pins 16a, 16b inside seats 15a, 15b, thus firmly keeping labelling group 4 in the docking position.

Constraining assemblies 35a, 35b are spaced apart from one another parallel to axis D (Figures 8 to 10).

In greater detail, each constraining assembly 35a, 35b contacts relative sleeve 27 housing relative pin 16a, 16b, when it is set in the relative operative configuration (Figure 7).

Furthermore, each constraining assembly 35a, 35b is spaced from relative sleeve 27 parallel to axis B, when it is set in the relative rest configuration.

In the embodiment shown, constraining assemblies 35a, 35b are carried by carousel 3.

In greater detail, constraining assemblies 35a, 35b are housed inside frame 6 of interface module 5.

More precisely, each constraining assembly 35a, 35b comprises:
- an abutting plate 40, which lies on a plane orthogonal to axis B; and
- a pair of appendices 41, which protrude parallel to one another from plate 40 towards relative seat 15a, 15b.

In the embodiment shown, appendices 41 lies on respective planes orthogonal to axis D, are parallel to one another and spaced parallel to axis D.

Furthermore, each plate 40 defines a slot 42 which is aligned with relative seats 15a, 15b parallel to respective axes M, N, and with pins 16a, 16b, parallel to respective axes C, when pins 16a, 16b engage relative seats 15a, 15b.

Each slot 42 has a width parallel to relative axis D and a length parallel to a relative axis E, orthogonal to axis B and D (Figures 9 and 10).

Axes E are horizontal, in the embodiment shown.

The length of slot 42 is greater than the width of same slot 42.

When each constraining assembly 35a, 35b is in relative rest configuration (Figures 4 to 6), plate 40 and appendices 41 are in respective rest and raised positions with respect to axis B.

When each constraining assembly 35a, 35b is in relative operative configuration (Figure 7), plate 40 and appendices 41 are in respective operative and lowered positions with respect to axis B.

When plate 40 of each constraining assembly 35a, 35b is in the relative rest and raised position, it is axially spaced along relative axis M, N from relative seat 15a, 15b.

When plate 40 of each constraining assembly 35a, 35b is in the relative rest and raised position, it is axially spaced from relative pin 16a, 16b parallel to relative axes C, when relative pin 16a, 16b engages relative seat 15a, 15b.

Furthermore, relative slot 42 is disengaged and spaced apart from relative pin 16a, 16b parallel to axis B.

When, each plate 40 is in relative operative position, it abuts against and presses end 29 of relative pin 16a, 16b towards relative seat 15a, 15b.

As a result, pins 16a, 16b are subjected to relative axial actions parallel to axes D and constrained inside relative seats 15a, 15b.

In the embodiment shown, the operative position of plates 40 and appendices 41 are lowered parallel to axis B with respect to the rest position thereof.

Furthermore, each constraining assembly 35a, 35b comprises an actuator 45 (Figure 8) for moving relative plate 40 between the relative rest and raised position and the relative lowered and operative position.

In greater detail, actuators 45 are arranged between seats 15a, 15b along axis D.

Each actuator 45 comprises, in turn,:
- a housing 46 fitted to wall 8 of frame 6; and
- a piston 47, which protrudes from housing 46 towards wall 7, is slidable parallel to relative axis A, B, M, N with respect to housing 46 and is connected to housing 46.

Housing 46 comprises not-shown control means for moving piston 47 parallel to relative axis A, B, M and N.

Control means can be electrically, pneumatically or hydraulically operated.

Labelling group 4 can be arranged in:
- a stored position (Figure 2), in which pedestals 21 and wheels 22 rest on floor 34; and
- the docking position (Figure 7), in which pedestals 21 are raised from floor 34 and wheels 22 rest on floor 34.

As evident from Figures 2 and 3, labelling group 4 is picked by a trans-pallet 60 in the stored position and arranged in the docking position.

Wheels 22 have respective rotation axes I and can be tilted about an axis J between:
- respective first angular positions (Figures 2 to 6) ; and
- respective second angular positions Figure 7), in which they lie on a plane orthogonal to direction G.

Axis J is parallel to axis C and orthogonal to floor 34, when labelling group 4 is in the stored position.

Wheels 22 are in the respective first positions, when labelling group 4 is in the stored position.

Wheels 22 are in the respective second positions, when labelling group 4 is in the docking position.

It is important to point out that wheels 22 are not used for causing the rolling of labelling group 4 on floor 34 from the transport position to the docking position.

Alternatively, labelling group 4 could comprise a pair of spheres instead of wheels 22.

The docking of labelling groups 4 to carousel 3 is described with reference to only one labelling group 4 and relative interface module 5, and starting from a condition (Figure 2), in which constraining assemblies 35a, 35b are in respective rest configurations and labelling group 4 is in the stored position, with wheels and pedestal 21 resting on a floor 34.

In this situation, wheels 22 are in respective first angular positions.

At this stage, a movable plane 61 of trans-pallet 60 is inserted below frame 20 and is raised orthogonally to floor 34, so as to raise frame 20, wheels 22, pedestals 21 and whole labelling group 4 from floor 34 (Figure 3).

Trans-pallet 60 approaches labelling group 4 to the interface module 5 of carousel 3 (Figure 4), up to reach a position in which axes C of pin 16a, 16b are aligned with relative axes M, N of respective seats 15a, 15b (Figure 5).

Movable plane 61 is then lowered towards floor 34, so as to engage pins 16a, 16b inside respective seats 15a, 15b, with pedestals 21 and wheel 22 still raised with respect to floor 34 (Figure 6).

Due to the fact that constraining assemblies 35a, 35b are in the respective rest configurations, plates 40 do not interfere with the positioning of pins 16a, 16b inside seats 15a, 15b.

Afterwards, plane 61 is completely lowered with respect to floor 60 and trans-pallet 60 is moved away from carousel 3.

Due to the fact that pins 16a, 16b engage relative seats 15a, 15b, labelling group 4 remains inclined with pedestals 21 raised from floor 34 and wheels 22 on floor 34 (Figure 7).

In the meanwhile, constraining assemblies 35a, 35b simultaneously move from the relative rest configurations to the relative operative configurations, in which they constrain pins 16a, 16b inside relative seats 15a, 15b (Figure 7), and wheels 22 are rotated from respective first angular positions to respective second angular positions.

In greater detail, plates 40 simultaneously move along axis B from:
- the relative rest positions, in which they are spaced along axis B from pins 16a, 16b engaging seats 15a, 15b; to
- the relative operative positions, in which they abut against sleeve 27 and press pins 16a, 16b inside seats 15a, 15b parallel to axis B.

Accordingly, pins 16a, 16b are constrained inside seats 15a, 15b.

Thanks to the fact that wheels 22 are arranged in the respective second angular positions, labelling group 4 can slightly rotate about axis A and with respect to carousel 3.

Accordingly, pins 16a, 16b can slightly adjust the position of relative axes C with respect to axes M, N of corresponding seats 15a, 16b (Figure 7), up to when both pins 16a, 16b are firmly housed inside relative seats 15a, 15b.

At this stage, labelling group 4 is firmly docked with respect to carousel 3 and labelling machine 1 can properly operate.

From an analysis of the features of labelling machine 1 and method made according to the present invention, the advantages it allows to obtain are apparent.

In particular, labelling machine 1 comprises constraining assemblies 35a, 35b movable between:
- a rest configuration, in which they are detached from pins 16a, 16b engaging relative seats 15a, 15b; and
- an operative configuration, in which they cooperate with pins 16a, 16b engaging relative seats 15a, 15b.

Accordingly, constraining assemblies 35a, 35b constrain pins 16a, 16b inside seats 15a, 15b.

As a result of this constrain action, pins 16a, 16b are more firmly kept in their theoretical positions inside seats 15a, 15b, when compared with the known solutions described in the introductory part of the present description.

Therefore, the vibrations generated by the operation of labelling group 4 are less likely to cause a movement of pins 16a, 16b inside respective seats 15a, 15b.

Accordingly, the final precision and repeatibility in the application position of the labels onto articles 17 is enhanced.

Furthermore, the constraining action of constraining assemblies 35a, 35b ensure a proper positioning of pins 16a, 16b inside relative seats 15a, 15b also in case of unbalanced and non-symmetrical labelling group 4.

As a consequence, it is dramatically reduced the risk that a not proper docking of labelling group 4 to carousel 3 could either preventing labelling machine 1 from operating or affect the final precision and repeatibility in the application of labels to articles 17.

Also in case floor 34 is not even, constraining assembly 35a, 35b contribute to arrange labelling group 4 very close to the theoretical position thereof assumed in case of even floor.

As a result, also in this case, the final precision and repeatibility in the application of labels onto relative articles 17 is enhanced in comparison with the known solution described in the introductory part of the present description.

Finally, wheels 22 set in the respective second angular position or not-shown spheres of labelling group 4 allow the latter to slightly rotate about axis A, when labelling group 4 is in the docking position and constraining assemblies 35a, 35b are in the operative configuration.

Accordingly, pin 16b can perfectly centre itself inside seat 16b, thus ensuring a higher degree of precision and repeatibility in the application of labels onto relative articles 17.

Finally, it is apparent that modifications and variants not departing from the scope of protection of the claims may be made to labelling machine 1 and to the method.

In particular, seats 15a, 15b could be carried by labelling group 4 and pins 16a, 16b could be carried by interface module 5 of carousel 3.

Constraining assemblies 35a, 35b could be carried by labelling group 4 instead of interface 5 of carousel 3.

Labelling machine 1 could comprise only one constraining assembly 35a, 35b.

## Claims

1. A labelling machine (1) for applying labels onto respective articles (17), comprising:
- a carousel (3), which is rotatable about a first axis (A) and is adapted to convey said articles (17) onto which said labels are, in use, applied;
- a carousel frame, which supports said carousel (3) and rests on a floor (34); and
- a modular labelling group (4), which is adapted to apply said labels onto said articles (17);
said carousel frame comprising one (15a, 15b) of at least one seat (15a, 15b) or at least one pin (16a, 16b);
said modular labeling group (4) comprising the other one (16a, 16b) of at least one seat (15a, 15b) or at least one pin (16a, 16b);
said at least one pin (16a, 16b) engaging said seat (15a, 15b), so as to dock said modular labelling group (4) to said carousel frame; said labelling machine (1) further comprising at least one constraining assembly (35a, 35b) for constraining said at least one pin (15a, 15b) inside said at least one seat (16a, 16b);
said constraining assembly (35a, 35b) being movable towards and away from said at least one seat (15a, 15b) between:
- a rest configuration, in which it is detached from said at least one pin (16a, 16b) engaging said at least one seat (15a, 15b); and
- an operative configuration, in which it cooperates with said at least one pin (16a, 16b) engaging said at least one seat (15a, 15b), so as to constrain said pin (16a, 16b) inside said seat (15a, 15b);
**characterized in that** the labelling machine further comprises at least one sleeve (27) surrounding and screwed to said at least one pin (16a, 16b);
**in that** said constraining assembly (35a, 35b) contacts, in use, said sleeve (27) and is detached, in use, from said pin (16a, 16b), when it is set, in use, in said operative configuration; and **in that** said constraining assembly (35a, 35b) further comprises :
- a plate (40) lying on a plane transversal to a second axis (B), which is parallel to said first axis (A), and defining a through slot (42), which is open parallel to said second axis (B);
said slot (42) being engaged with gap by said at least one pin (16a, 16b) and said plate (40) contacting said sleeve (27), when said constraining assembly (35a, 35b) is set in said operative configuration.

2. The labelling machine of claim 1, **characterized in that** said constraining assembly (35a, 35b) comprises an actuator (45), which is operable to move said plate (40) parallel to said second axis (B); said actuator (45) comprising:
- a body (46), which is fixed to said carousel frame with respect to said second axis (B); and
- a piston (47), which protrudes from said body (46), is movable with respect to said body (46) parallel to said second axis (B) and is connected to said plate (40).

3. The labelling machine of claim 2, **characterized in that** said constraining assembly (35a, 35b) comprises a pair of appendices (41) protruding from said plate (40); said actuator (45) is arranged on one side only of said appendices (41).

4. The labelling machine of any one of the foregoing claims, **characterized by** comprising a pair of said seats (15a, 15b), which are spaced transversally to said first axis (A);
said labelling machine (1) comprising a pair of corresponding independently movable said constraining assemblies (35a, 35b), which are independently movable towards and away from said relative seats (15a, 15b).

5. The labelling machine of claim 4, **characterized in that** one (15a) of said seats (15a, 15b) is conical along a third axis (M) and the other one (15b) is open tangentially to a fourth axis (D) transversal to said third axis (M).

6. The labelling machine of any one of the foregoing claims, **characterized in that** said constraining assembly (35a, 35b) is carried by said carousel frame.

7. The labelling machine of any one of claims 1 to 5, **characterized in that** said labelling group (4) carries said at least one pin (16a, 16b).

8. The labelling machine of any one of claims 1 to 6, **characterized in that** said carousel (3) carries said at least one seat (15a, 15b).

9. The labelling machine of any one of the foregoing claims, **characterized in that** said constraining assembly (35a, 35b) is arranged radially inner to the outer periphery (14) of said carousel frame with respect to said axis (A).

10. The labelling machine of any one of the foregoing claims, **characterized in that** said modular labelling group (4) comprises support means (22) which are configured to rest on said floor (34) and to allow said modular labelling group (4) to adjust its position tangentially to said first axis (A), when said modular labelling group (4) is docked to said carousel frame.

11. The labelling machine of claim 10, **characterized in that** said support means (22) comprise at least one sphere or at least one wheel (22), which is rotatable between:
- a transport position, which is assumed during the transport of said modular labelling group (4) ; and
- a docking position, in which it lies on a plane transversal to a direction (G) radial with respect to said first axis (A) and is assumed when said at least one pin (16a, 16b) engages said at least one seat (15a, 15b).

12. A method of docking a modular labelling group (4) to a labelling machine (1);
said modular labelling group (4) being adapted to apply respective labels onto a plurality of articles (17) advanced by a carousel (3) supported by a carousel frame, which rests on a floor (34), of said labelling machine (1);
said method comprising the steps of:
i) engaging at least one pin (16a, 16b) carried by one (4) of said modular labelling group (4) or said carousel frame of said labelling machine (1) with at least one seat (15a, 15b) carried by the other (3) of said modular labelling group (4) or said carousel frame, so as to dock said labelling modular group (4) to said carousel frame;
ii) moving at least one constraining assembly (35a, 35b) between:
- a rest configuration, in which it is detached from said at least one pin (16a, 16b) engaging said at least one seat (15a, 15b); and
- an operative configuration, in which it cooperates with said at least one pin (16a, 16b) engaging said at least one seat (15a, 15b);
**characterized by** said constraining assembly (35a, 35b) contacting at least one sleeve (27) surrounding and screwed to said at least one pin (16a, 16b and being detached from said pin (16a, 16b), when said constraining assembly (35a, 35b) is in said operative configuration; and whereby said constraining assembly (35a, 35b) further comprises :
- a plate (40) lying on a plane transversal to a second axis (B), which is parallel to said first axis (A) and defining a through slot (42), which is open parallel to said second axis (B); and
said slot (42) being engaged with gap by said at least one pin (16a, 16b) and said plate (40) contacting said sleeve (27), when said constraining assembly (35a, 35b) is set in said operative configuration.

13. The method of claim 12, **characterized by** comprising a step iii) of arranging support means (22) of said modular labelling group (4) on said floor (34) and in a position in which they allow said modular labelling group (4) to adjust its position tangentially to an axis (A) of said carousel frame, when said modular labelling group (4) is being docked to said carousel frame.

14. The method of claim 13, **characterized by** comprising the steps of:
iv) keeping said support means (22) spaced from said floor (34) during said step i);
v) arranging said support means (22) on said floor (34) during said step ii) and when said constraining assembly (35a, 35b) is in said operative configuration.

## Patentansprüche

1. Etikettiermaschine (1) zum Anbringen von Etiketten auf entsprechenden Artikeln (17), umfassend:
- ein Karussell (3), das um eine erste Achse (A) drehbar und geeignet ist, die Artikel (17) zu befördern, auf denen im Gebrauch die Etiketten angebracht werden,
- einen Karussellrahmen, der das Karussell (3) trägt und auf einem Boden (34) ruht, und
- eine modulare Etikettiergruppe (4), die geeignet ist, die Etiketten auf den Artikeln (17) anzubringen,
wobei der Karussellrahmen eine (15a, 15b) von wenigstens einem Sitz (15a, 15b) oder wenigstens einem Stift (16a, 16b) umfasst,
wobei die modulare Etikettiergruppe (4) das andere (16a, 16b) von wenigstens einem Sitz (15a, 15b) oder der wenigstens einem Stift (16a, 16b) umfasst,
wobei der wenigstens eine Stift (16a, 16b) in den Sitz (15a, 15b) eingreift, um die modulare Etikettiergruppe (4) an den Karussellrahmen anzudocken,
wobei die Etikettiermaschine (1) ferner wenigstens eine Halteanordnung (35a, 35b) umfasst, um den wenigstens einen Stift (15a, 15b) innerhalb des wenigstens einen Sitzes (16a, 16b) zu halten,
wobei die Halteanordnung (35a, 35b) hin zu dem wenigstens einen Sitz (15a, 15b) und von diesem weg bewegbar ist, und zwar zwischen:
- einer Ruhestellung, in der sie von dem wenigstens einen Stift (16a, 16b), der in den wenigstens einen Sitz (15a, 15b) eingreift, gelöst ist, und
- einer Betriebsstellung, in der sie mit dem wenigstens einen Stift (16a, 16b), der in den wenigstens einen Sitz (15a, 15b) eingreift, zusammenwirkt, um den Stift (16a, 16b) innerhalb des Sitzes (15a, 15b) zu halten,
**dadurch gekennzeichnet, dass** die Etikettiermaschine ferner wenigstens eine Hülse (27) umfasst, die den wenigstens einen Stift (16a, 16b) umgibt und mit diesem verschraubt ist,
dass die Halteanordnung (35a, 35b) im Gebrauch die Hülse (27) berührt und im Gebrauch von dem Stift (16a, 16b) gelöst ist, wenn sie sich im Gebrauch in der Betriebsstellung befindet,
und dass die Halteanordnung (35a, 35b) ferner Folgendes umfasst:
- eine Platte (40), die auf einer Ebene liegt, die zu einer zu der ersten Achse (A) parallel verlaufenden zweiten Achse (B) quer verläuft, und die einen Durchgangsschlitz (42) festlegt, der parallel zu der zweiten Achse (B) offen ist,
wobei der wenigstens eine Stift (16a, 16b) mit Abstand in den Schlitz (42) eingreift und die Platte (40) die Hülse (27) berührt, wenn sich die Halteanordnung (35a, 35b) in der Betriebsstellung befindet.

2. Etikettiermaschine nach Anspruch 1, **dadurch gekennzeichnet, dass** die Halteanordnung (35a, 35b) einen Betätiger (45) umfasst, der in der Lage ist, die Platte (40) parallel zu der zweiten Achse (B) zu bewegen, wobei der Betätiger (45) Folgendes umfasst:
- einen Körper (46), der an dem Karussellrahmen in Bezug auf die zweite Achse (B) befestigt ist, und
- einen Kolben (47), der von dem Körper (46) vorsteht, in Bezug auf den Körper (46) parallel zu der zweiten Achse (B) bewegbar ist und mit der Platte (40) verbunden ist.

3. Etikettiermaschine nach Anspruch 2, **dadurch gekennzeichnet, dass** die Halteanordnung (35a, 35b) ein Paar Fortsätze (41) umfasst, die von der Platte (40) vorstehen, wobei der Betätiger (45) nur auf einer Seite der Fortsätze (41) angeordnet ist.

4. Etikettiermaschine nach einem der vorhergehenden Ansprüche, **dadurch gekennzeichnet, dass** sie ein Paar der Sitze (15a, 15b) umfasst, die quer zu der ersten Achse (A) beabstandet sind, wobei die Etikettiermaschine (1) ein Paar entsprechender, unabhängig bewegbarer Halteanordnungen (35a, 35b) umfasst, die unabhängig hin zu den entsprechenden Sitzen (15a, 15b) und von diesen weg bewegbar sind.

5. Etikettiermaschine nach Anspruch 4, **dadurch gekennzeichnet, dass** einer (15a) der Sitze (15a, 15b) konisch entlang einer dritten Achse (M) verläuft und der andere (15b) tangential zu einer zu der dritten Achse (B) quer verlaufenden vierten Achse (D) offen ist.

6. Etikettiermaschine nach einem der vorhergehenden Ansprüche, **dadurch gekennzeichnet, dass** die Halteanordnung (35a, 35b) durch den Karussellrahmen getragen ist.

7. Etikettiermaschine nach einem der Ansprüche 1 bis 5, **dadurch gekennzeichnet, dass** die Etikettiergruppe (4) den wenigstens einen Stift (16a, 16b) trägt.

8. Etikettiermaschine nach einem der Ansprüche 1 bis 6, **dadurch gekennzeichnet, dass** das Karussell (3) den wenigstens einen Sitz (15a, 15b) trägt.

9. Etikettiermaschine nach einem der vorhergehenden Ansprüche, **dadurch gekennzeichnet, dass** die Halteanordnung (35a, 35b) in Bezug auf die Achse (A) radial innen von dem Außenumfang (14) des Karussellrahmens angeordnet ist.

10. Etikettiermaschine nach einem der vorhergehenden Ansprüche, **dadurch gekennzeichnet, dass** die modulare Etikettiergruppe (4) Stützmittel (22) umfasst, die dazu ausgelegt sind, auf dem Boden (34) zu ruhen und zu ermöglichen, dass die modulare Etikettiergruppe (4) ihre Stellung tangential zu der ersten Achse (A) einstellt, wenn die modulare Etikettiergruppe (4) an dem Karussellrahmen angedockt ist.

11. Etikettiermaschine nach Anspruch 10, **dadurch gekennzeichnet, dass** die Stützmittel (22) wenigstens eine Kugel oder wenigstens ein Rad (22) umfassen, das zwischen
- einer Transportstellung, die während des Transports der modularen Etikettiergruppe (4) eingenommen wird, und
- einer Andockstellung, in der es auf einer Ebene liegt, die quer zu einer in Bezug auf die erste Achse (A) radial verlaufenden Richtung (G) verläuft, und die eingenommen wird, wenn der wenigstens eine Stift (16a, 16b) in den wenigstens einen Sitz (15a, 15b) eingreift, drehbar ist.

12. Verfahren zur Andockung einer modularen Etikettiergruppe (4) an eine Etikettiermaschine (1), wobei die modulare Etikettiergruppe (4) geeignet ist, entsprechende Etiketten auf einer Vielzahl von Artikeln (17) anzubringen, die durch ein Karussell (3) befördert werden, das durch einen auf einem Boden (34) ruhenden Karussellrahmen der Etikettiermaschine (1) getragen ist,
wobei das Verfahren folgende Schritte umfasst:
i) Eingreifen des durch eines (4) der modularen Etikettiergruppe (4) oder des Karussellrahmens der Etikettiermaschine (1) getragenen wenigstens einen Stifts (16a, 16b) in den von dem anderen (3) der modularen Etikettiergruppe (4) oder des Karussellrahmens getragenen wenigstens einen Sitz (15a, 15b), um die modulare Etikettiergruppe (4) an den Karussellrahmen anzudocken,
ii) Bewegen der wenigstens einen Halteanordnung (35a, 35b) zwischen
- einer Ruhestellung, in der sie von dem wenigstens einen Stift (16a, 16b), der in den wenigstens einen Sitz (15a, 15b) eingreift, gelöst ist, und
- einer Betriebsstellung, in der sie mit dem wenigstens einen Stift (16a, 16b), der in den wenigstens einen Sitz (15a, 15b) eingreift, zusammenwirkt,
**dadurch gekennzeichnet, dass** die Halteanordnung (35a, 35b) wenigstens eine Hülse (27) berührt, die den wenigstens einen Stift (16a, 16b) umgibt und mit diesem verschraubt ist, und von dem Stift (16a, 16b) gelöst ist, wenn sich die Halteanordnung (35a, 35b) in der Betriebsstellung befindet, und
wobei die Halteanordnung (35a, 35b) ferner Folgendes umfasst:
- eine Platte (40), die auf einer Ebene liegt, die zu einer zu der ersten Achse (A) parallel verlaufenden zweiten Achse (B) quer verläuft, und die einen Durchgangsschlitz (42) festlegt, der parallel zu der zweiten Achse (B) offen ist,
und wobei der wenigstens eine Stift (16a, 16b) mit Abstand in den Schlitz (42) eingreift und die Platte (40) die Hülse (27) berührt, wenn sich die Halteanordnung (35a, 35b) in der Betriebsstellung befindet.

13. Verfahren nach Anspruch 12, **dadurch gekennzeichnet, dass** es folgenden Schritt umfasst:
iii) Anordnen von Stützmitteln (22) der modularen Etikettiergruppe (4) auf dem Boden (34) und in einer Stellung, in der sie ermöglichen, dass die modulare Etikettiergruppe (4) ihre Stellung tangential zu einer Achse (A) des Karussellrahmens einstellt, wenn die modulare Etikettiergruppe (4) an dem Karussellrahmen angedockt ist.

14. Verfahren nach Anspruch 13, **dadurch gekennzeichnet, dass** es folgende Schritte umfasst:
iv) Beabstandethalten der Stützmittel (22) von dem Boden (34) während Schritt i),
v) Anordnen der Stützmittel (22) auf dem Boden (34) während Schritt ii) und wenn sich die Halteanordnung (35a, 35b) in der Betriebsstellung befindet.

## Revendications

1. Machine d'étiquetage (1) pour appliquer des étiquettes sur des articles respectifs (17), comprenant:
- un carrousel (3), qui est rotatif autour d'un premier axe (A) et est adapté pour transporter lesdits articles (17) sur lesquels lesdites étiquettes sont appliquées lors de l'utilisation;
- un cadre de carrousel, qui supporte ledit carrousel (3) et qui repose sur un plancher (34); et
- un groupe d'étiquetage modulaire (4), qui est adapté pour appliquer lesdites étiquettes sur lesdits articles (17);
ledit cadre de carrousel comprenant un (15a, 15b) parmi au moins un siège (15a, 15b) ou au moins une broche (16a, 16b);
ledit groupe d'étiquetage modulaire (4) comprenant l'autre (16a, 16b) parmi au moins un siège (15a, 15b) ou au moins une broche (16a, 16b);
ladite au moins une broche (16a, 16b) engageant ledit siège (15a, 15b), de manière à fixer ledit groupe d'étiquetage modulaire (4) audit cadre de carrousel;
ladite machine d'étiquetage (1) comprenant en outre au moins un ensemble de contrainte (35a, 35b) pour contraindre ladite au moins une broche (15a, 15b) à l'intérieur dudit au moins un siège (16a, 16b);
ledit ensemble de contrainte (35a, 35b) pouvant être déplacé en direction et à l'écart dudit au moins un siège (15a, 15b) entre:
- une configuration de repos, dans laquelle il est détaché de ladite au moins une broche (16a, 16b) qui engage ledit au moins un siège (15a, 15b); et
- une configuration opérationnelle, dans laquelle il coopère avec ladite au moins une broche (16a, 16b) qui engage ledit au moins un siège (15a, 15b), de manière à contraindre ladite broche (16a, 16b) à l'intérieur dudit siège (15a, 15b),
**caractérisée en ce que** la machine d'étiquetage comprend en outre au moins un manchon (27) qui entoure et qui est vissé à ladite au moins une broche (16a, 16b);
**en ce que** ledit ensemble de contrainte (35a, 35b) entre en contact, lors de l'utilisation, avec ledit manchon (27) et est détaché, lors de l'utilisation, de ladite broche (16a, 16b), lorsqu'il est placé, lors de l'utilisation, dans ladite configuration opérationnelle;
et **en ce que** ledit ensemble de contrainte (35a, 35b) comprend en outre une plaque (40) qui repose sur un plan transversal à un deuxième axe (B), qui est parallèle audit premier axe (A) et qui définit une fente traversante (42), qui est ouverte parallèlement audit deuxième axe (B);
ladite fente (42) étant engagée avec un espace par ladite au moins une broche (16a, 16b) et ladite plaque (40) entrant en contact avec ledit manchon (27), lorsque ledit ensemble de contrainte (35a, 35b) est placé dans ladite configuration opérationnelle.

2. Machine d'étiquetage selon la revendication 1, **caractérisée en ce que** ledit ensemble de contrainte (35a, 35b) comprend un actionneur (45), qui est actionnable pour déplacer ladite plaque (40) parallèlement audit deuxième axe (B);
ledit actionneur (45) comprenant:
- un corps (46), qui est fixé audit cadre de carrousel par rapport audit deuxième axe (B); et
- un piston (47), qui fait saillie à partir dudit corps (46), qui est déplaçable par rapport audit corps (46) parallèlement audit deuxième axe (B) et qui est connecté à ladite plaque (40).

3. Machine d'étiquetage selon la revendication 2, **caractérisée en ce que** ledit ensemble de contrainte (35a, 35b) comprend une paire d'appendices (41) qui font saillie à partir de ladite plaque (40); ledit actionneur (45) étant agencé sur un côté seulement desdits appendices (41).

4. Machine d'étiquetage selon l'une quelconque des revendications précédentes, **caractérisée en ce qu'**elle comprend une paire desdits sièges (15a, 15b), qui sont espacés transversalement par rapport audit premier axe (A) ;
ladite machine d'étiquetage (1) comprenant une paire desdits ensembles de contrainte correspondants mobiles indépendamment (35a, 35b), qui sont déplaçables de façon indépendante en direction et à l'écart desdits sièges relatifs (15a, 15b).

5. Machine d'étiquetage selon la revendication 4, **caractérisée en ce qu'**un premier (15a) desdits sièges (15a, 15b) est conique le long d'un troisième axe (M) et l'autre (15b) est ouvert tangentiellement à un quatrième axe (D) transversal audit troisième axe (M).

6. Machine d'étiquetage selon l'une quelconque des revendications précédentes, **caractérisée en ce que** ledit ensemble de contrainte (35a, 35b) est porté par ledit cadre de carrousel.

7. Machine d'étiquetage selon l'une quelconque des revendications 1 à 5, **caractérisée en ce que** ledit groupe d'étiquetage modulaire (4) porte ladite au moins une broche (16a, 16b).

8. Machine d'étiquetage selon l'une quelconque des revendications 1 à 6, **caractérisée en ce que** ledit carrousel (3) porte ledit au moins un siège (15a, 15b).

9. Machine d'étiquetage selon l'une quelconque des revendications précédentes, **caractérisée en ce que** ledit ensemble de contrainte (35a, 35b) est agencé radialement intérieurement à la périphérie extérieure (14) dudit cadre de carrousel par rapport audit axe (A).

10. Machine d'étiquetage selon l'une quelconque des revendications précédentes, **caractérisée en ce que** ledit groupe d'étiquetage modulaire (4) comprend des moyens de support (22) qui sont configurés de manière à reposer sur ledit plancher (34) et à permettre audit groupe d'étiquetage modulaire (4) de régler sa position tangentiellement audit premier axe (A), lorsque ledit groupe d'étiquetage modulaire (4) est fixé audit cadre de carrousel.

11. Machine d'étiquetage selon la revendication 10, **caractérisée en ce que** lesdits moyens de support (22) comprennent au moins une sphère ou au moins une roue (22) qui est rotative entre:
- une position de transport, qui est adoptée pendant le transport dudit groupe d'étiquetage modulaire (4); et
- une position de fixation, dans laquelle elle est située sur un plan transversal à une direction (G) radiale par rapport audit premier axe (A) et qui est adoptée lorsque ladite au moins une broche (16a, 16b) engage ledit au moins un siège (15a, 15b).

12. Procédé de fixation d'un groupe d'étiquetage modulaire (4) à une machine d'étiquetage (1);
ledit groupe d'étiquetage modulaire (4) étant adapté pour appliquer des étiquettes respectives sur une pluralité d'articles (17) avancés par un carrousel (3) supporté par un cadre de carrousel, qui repose sur un plancher (34) de ladite machine d'étiquetage (1),
ledit procédé comprenant les étapes suivantes:
i) engager au moins une broche (16a, 16b) portée par un (4) parmi ledit groupe d'étiquetage modulaire (4) ou ledit cadre de carrousel de ladite machine d'étiquetage (1) avec au moins un siège (15a, 15b) porté par l'autre (3) parmi ledit groupe d'étiquetage modulaire (4) ou ledit cadre de carrousel, de manière à fixer ledit groupe d'étiquetage modulaire (4) audit cadre de carrousel;
ii) déplacer au moins un ensemble de contrainte (35a, 35b) entre:
- une configuration de repos, dans laquelle il est détaché de ladite au moins une broche (16a, 16b) qui engage ledit au moins un siège (15a, 15b); et
- une configuration opérationnelle, dans laquelle il coopère avec ladite au moins une broche (16a, 16b) qui engage ledit au moins un siège (15a, 15b),
**caractérisé en ce que** ledit ensemble de contrainte (35a, 35b) entre en contact avec au moins un manchon (27) qui entoure et est vissé à ladite au moins une broche (16a, 16b) et qui est détaché de ladite broche (16a, 16b), lorsque ledit ensemble de contrainte (35a, 35b) se trouve dans ladite configuration opérationnelle; et
dans lequel ledit ensemble de contrainte (35a, 35b) comprend en outre une plaque (40) qui repose sur un plan transversal à un deuxième axe (B), qui est parallèle audit premier axe (A) et qui définit une fente traversante (42), qui est ouverte parallèlement audit deuxième axe (B);
et ladite fente (42) étant engagée avec un espace par ladite au moins une broche (16a, 16b) et ladite plaque (40) entrant en contact avec ledit manchon (27), lorsque ledit ensemble de contrainte (35a, 35b) est placé dans ladite configuration opérationnelle.

13. Procédé selon la revendication 12, **caractérisé en ce qu'**il comprend une étape iii) qui consiste à agencer des moyens de support (22) dudit groupe d'étiquetage modulaire (4) sur ledit plancher (34) et dans une position dans laquelle ils permettent audit groupe d'étiquetage modulaire (4) de régler sa position tangentiellement à un axe (A) dudit cadre de carrousel, lorsque ledit groupe d'étiquetage modulaire (4) est fixé sur ledit cadre de carrousel.

14. Procédé selon la revendication 13, **caractérisé en ce qu'**il comprend les étapes suivantes:
iv) maintenir lesdits moyens de support (22) espacés dudit plancher (34) pendant ladite étape i);
v) agencer lesdits moyens de support (22) sur ledit plancher (34) pendant ladite étape ii) et lorsque ledit ensemble de contrainte (35a, 35b) se trouve dans ladite configuration opérationnelle.
